Europäisches Patentamt

European Patent Office

Office européen des brevets

(11) Veröffentlichungsnummer: **0 115 597**
**B1**

(12) **EUROPÄISCHE PATENTSCHRIFT**

(45) Veröffentlichungstag der Patentschrift:
24.08.88

(51) Int. Cl.⁴: **G 12 B 5/00,** A 47 B 91/02

(21) Anmeldenummer: **83112421.9**

(22) Anmeldetag: **09.12.83**

(54) **Nivellierelement.**

(30) Priorität: **07.02.83 CH 685/83**

(43) Veröffentlichungstag der Anmeldung:
**15.08.84 Patentblatt 84/33**

(45) Bekanntmachung des Hinweises auf die Patenterteilung:
**24.08.88 Patentblatt 88/34**

(84) Benannte Vertragsstaaten:
**AT BE DE FR GB IT NL**

(56) Entgegenhaltungen:
**GB - A - 1 008 901**
**US - A - 3 366 991**
**US - A - 3 646 633**

(73) Patentinhaber: **Rudolf Schrepfer AG,
Eigenheimstrasse 22, CH-8700 Küsnacht-Zürich (CH)**

(72) Erfinder: **Schrepfer, Rudolf, Hesligenstrasse 30,
CH-8700 Küsnacht-Zürich (CH)**

(74) Vertreter: **Blumbach Weser Bergen Kramer Zwirner
Hoffmann Patentanwälte, Radeckestrasse 43,
D-8000 München 60 (DE)**

**Beschreibung**

Die Erfindung betrifft ein Nivellierelement mit einem Schraubenbolzen und einer Tragplatte, welcher Schraubenbolzen schwenkbar in einer Pfanne der Tragplatte abgestützt ist.

Bekannte Nivellierelemente dieser Bauart weisen den Nachteil auf, dass die Tragplatte nicht unverlierbar mit dem Schraubenbolzen verbunden ist. Das bedeutet, dass beim Aufstellen und Nivellieren eines Gerätes, einer Maschine zuerst der Schraubenbolzen durch den jeweiligen Tragrahmenteil der Maschine hindurchgeführt werden muss und danach die Tragplatte unter die Maschine geschoben werden muss, welches bedingt, dass dazu irgendwelche Behelfsmittel zum Stützen der Maschine verwendet werden müssen. Wird ein Gerät, eine Maschine verschoben, werden beim Anheben derselben die Schraubenbolzen aus der Tragplatte ausgehoben, und die Tragplatten müssen getrennt zum neuen Standort gebracht und wieder mit dem Schraubenbolzen ausgerichtet werden. Dieses sind offensichtlich zeitraubende Vorgänge. Weiter benötigen bei bekannten Nivellierelementen Schraubenbolzen unterschiedlicher Durchmesser jeweils diesen angepasste Tragplatten, so dass eine umfangreiche Lagerhaltung von Tragplatten notwendig ist.

Aus der Druckschrift US-A-3 366 991 ist ein Möbelgleiter bekannt, der einen mit dem Möbelstück verbundenen Schraubenbolzen aufweist, dessen dem Möbelstück abgewandtes, halbkugelförmiges Ende in eine Pfanne eines auf dem Boden liegenden Tragstücks eingreift. Die Pfanne ist eine Ausnehmung in dem Tragstück, die die Form eines Kugelabschnitts hat, der etwas grösser als eine Halbkugel ist. Die Radien des halbkugelförmigen Endes des Schraubenbolzens bzw. der Pfanne sind gleich. Der Durchmesser der Pfannenöffnung ist deshalb etwas kleiner als der grösste Durchmesser des halbkugelförmigen Endes des Schraubenbolzens. Das Tragstück besteht aus einem elastischen Kunststoff, so dass der die Pfannenöffnung umgebende Rand beim Einführen des kugelförmigen Endes des Schraubenbolzens elastisch ausweicht. Als eigentliche Sicherung gegen ein Auseinanderziehen von Schraubenbolzen und Tragstück ist eine auf das Tragstück gesetzte Metallkappe vorgesehen, die um einen unteren Rand des Tragstücks gebördelt und dadurch in diesem verankert ist. Mit einem zylindrischen umgebördelten Abschnitt ragt die Kappe in die Öffnung der Pfanne. Die Kappe muss nach dem Einstecken des Endes des Schraubenbolzens in die Pfanne auf das Tragstück aufgebracht werden.

Aus der Druckschrift US-A-1 008 901 ist ein Möbelgleiter bekannt, der einen dem vorgenannten Möbelgleiter ähnlichen Aufbau besitzt und sich von diesem im wesentlichen dadurch unterscheidet, dass die Pfanne im Tragstück einen Kugelabschnitt darstellt, der kleiner als eine Halbkugel ist. Schraubenbolzen und Tragstück werden mittels einer nachträglich aufgebrachten Metallkappe zusammengehalten.

Aus der US-A-3 646 633 ist ein Möbelgleiter für automatischen Höhenausgleich bekannt. Auch bei diesem Möbelgleiter ist ein mit dem Möbelstück verbundener Schraubenbolzen vorgesehen, dessen einem Tragstück zugewandter Kopf in Form einer Kegelstumpfabschnitts ausgebildet ist. Dieser Kopf greift in eine eine komplementäre Form aufweisende Pfanne eines Höhenausgleichsteils. Das dieses Höhenausgleichsteil aufnehmende Tragstück und der Schraubenbolzen werden auch in diesem Fall durch eine nachträglich aufzubringende Metallkappe aneinandergehalten.

Aufgabe der Erfindung ist es, ein für Maschinen geeignetes Nivellierelement mit einem Schraubenbolzen und einer Tragplatte zu schaffen, bei dem verhindert ist, dass sich beim Anheben des Schraubenbolzens dieser aus der Tragplatte löst, und zugleich auf einfache Weise gewährleistet wird, dass Schraubenbolzen unterschiedlicher Durchmesser in Verbindung mit derselben Tragplatte verwendet werden können.

Diese Erfindung wird durch ein Nivellierelement gemäss Patentanspruch 1 gelöst.

Bei einer bevorzugten Ausführung weist der Schraubenbolzen beim in der Tragplatte gelegenen Endabschnitt eine in Umfangsrichtung verlaufende Ausnehmung auf, wobei das Riegelglied einen dünnwandigen, mit der Tragplatte fest verbundenen Tragabschnitt aufweist, von welchem ein in die Ausnehmung ragender, dünnwandiger Federabschnitt absteht, wobei der dünnwandige Federabschnitt schiefwinklig zur Achse des Schraubenbolzens gegen die Stirnfläche hin geneigt verlaufen kann.

Nachfolgend wird der Erfindungsgegenstand anhand der Zeichnungen beispielsweise näher erläutert. Es zeigt:

Fig. 1 eine Seitenansicht, teilweise im Schnitt gezeichnet, eines Nivellierelementes, und

Fig. 2 in vergrössertem Massstab das Detail A der Fig. 1.

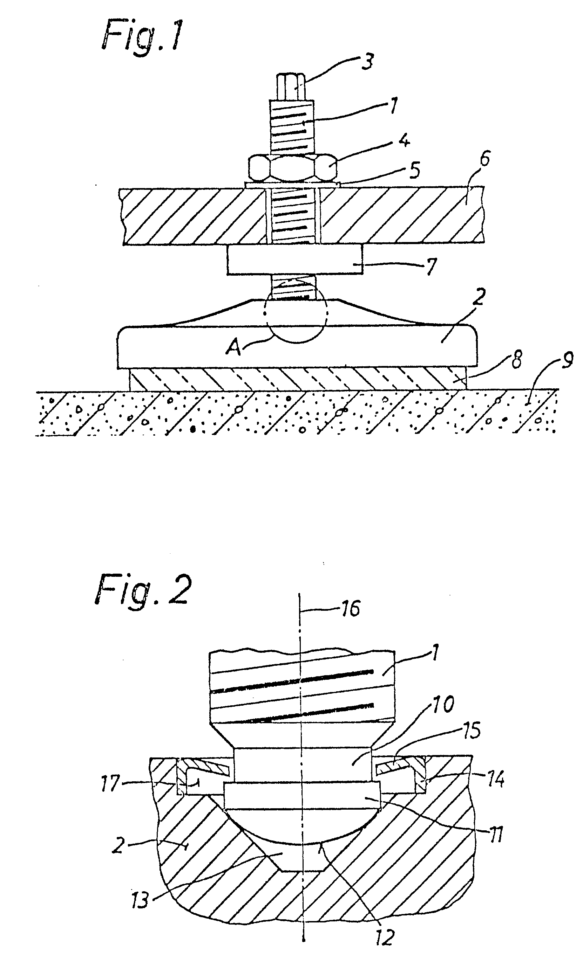

In der Fig. 1 ist schematisch ein Rahmenteil 6 eines Gerätes bzw. einer Maschine gezeigt, der sich auf einer Tragmutter 7 abstützt, welche auf einem Schraubenbolzen 1 aufgeschraubt ist. Die Tragmutter 7 kann beispielsweise eine Rändelung aufweisen oder irgendwelche Ausbildungen, um ein Drehen derselben mittels eines Werkzeuges zu erlauben. Der Schraubenbolzen 1 weist beim oberen Ende einen Sechskant auf. Eine Mutter 4 ist auf dem Schraubenbolzen 1 aufgeschraubt, welche Mutter 4 über eine Unterlagsscheibe 5 auf dem Rahmenteil 6 aufliegt. Der Schraubenbolzen 1 ist von einer Tragplatte 2 getragen, die sich in dieser Ausführung über eine Isolierplatte 8, welche beispielsweise eine Maschine in bezug auf Schwingungen gegen ein Fundament zu isolieren hat, auf einem Boden 9 abstützt.

In der Fig. 2, welche das Detail A der Fig. 1 in vergrössertem Massstab zeigt, ist der untere Endabschnitt des Schraubenbolzens 1 dargestellt. Dieser untere Endabschnitt weist eine in Umfangsrichtung verlaufende Ausnehmung 10 in Form einer Umfangsnut auf, welche von einem zylindrischen Abschnitt 11 gefolgt ist, welcher seinerseits von einer gewölbten Stirnfläche 12 des Schraubenbolzens 1 gefolgt ist. In der Tragplatte 2 ist eine kegelstumpfförmige Pfanne 13 ausgebildet, wobei die gewölbte Stirnfläche 12 in Linienberührung mit dieser Pfanne 13 steht. In einer der kegelstumpfförmigen Pfanne 13 in Richtung der Bodenfläche gesehen folgenden zylinderförmigen Ausnehmung 17 ist ein Riegelglied angeordnet. Dieses besteht aus einem ringförmigen Tragabschnitt 14, welcher fest mit der Tragplatte 2 verbunden ist, von welchem Tragabschnitt 14 ein Federabschnitt 15 absteht. Dieses Riegelglied ist ein dünnwandiges Gebilde und der Federabschnitt 15 ist derart ausgebildet, dass er beim Hineinschieben des unteren Endes des Schraubenbolzens 1 in die Pfanne 13 elastisch ausweicht. Der Federabschnitt 15 verläuft schiefwinklig zur Mittelachse 16 des Schraubenbolzens 1. Daraus ist ersichtlich, dass der Schraubenbolzen 1 wohl in die Pfanne 13 hineingeschoben werden kann, wobei bei der Einschiebebewegung der Federabschnitt 15 elastisch ausweicht, jedoch ein Lösen des Schraubenbolzens 1 aus der Pfanne 13 und damit von der Tragplatte 2 unmöglich ist. Um das elastische Ausweichen des Federabschnittes 15 zu ermöglichen, kann dieser dünnwandige, tellerförmige Ring in radialer Richtung desselben verlaufende Schlitze aufweisen. Die gewölbte Stirnfläche 12 des Schraubenbolzens 1 erlaubt nicht nur, dass der Schraubenbolzen 1 schiefwinklig zur Tragplatte 2 verlaufen kann, sondern vereinfacht auch das Einsetzen des Schraubenbolzens 1 in die Pfanne 13. Da aufgrund des begrenzten Federweges ein genau senkrecht zur Tragplatte 2 verlaufendes Einschieben des Schraubenbolzens 1 nicht in allen Fällen zum Zurückschnappen und damit Einrasten des Federabschnittes 15 führt, kann aufgrund der genannten Ausbildungsform der Schraubenbolzen 1 schief in die Pfanne 13 eingeführt werden, so dass das Zurückschnappen und Einklinken des Federabschnittes 15 zuerst bei einer Seite der Ausnehmung 10 und bei einem darauf erfolgenden Zurückschwenken des Schraubenbolzens 1 auf der diametral gegenüberliegenden Seite erfolgt.

Aufgrund der gezeigten Konstruktion lässt sich nun dieselbe Tragplatte zusammen mit Schraubenbolzen 1 unterschiedlicher Durchmesser verwenden, da der unterste Endabschnitt des Schraubenbolzens, nämlich Ausnehmung 10, zylindrischer Abschnitt 11 und Stirnfläche 12 jeweils dieselben, der Tragplatte 2 entsprechenden Abmessungen aufweisen. Damit lässt sich eine Tragplatte 2 vorgegebenen Abmessungen der Pfanne mit Schraubenbolzen unterschiedlicher Durchmesser verwenden, was die Lagerhaltung beträchtlich vermindert und auch die Herstellungskosten tief hält. Offensichtlich sind beispielsweise 3 bis 4 genormte Grössen Tragplatten vorhanden, um sämtliche in Betracht zu ziehende Schraubenbolzen-Durchmesser berücksichtigen zu können.

Ist nun der Schraubenbolzen 1 mit der Tragplatte 2 in der in der Fig. 2 gezeigten Stellung unlösbar verriegelt, bleibt die Tragplatte 2 immer mit dem Schraubenbolzen 1 verbunden, welches bei einem Standortwechsel eines Gerätes, einer Maschine sehr vorteilhaft ist. Auch lässt sich nun die Tragplatte 2 bereits bei der Montage mit dem Schraubenbolzen 1 verbinden, so dass beim Aufstellen einer Maschine nicht nur das Unterschieben der Tragplatte 2 unter die angehobene Maschine 1 wegfällt, sondern auch beim Transportieren eine derart ausgerüstete Maschine ohne weiteres zwischengelagert werden kann, ohne dass besondere Vorkehrungen zum Schutze der tragenden Rahmenteile oder sogar der bereits eingesetzten Schraubenbolzen getroffen werden müssen.

## Patentansprüche

1. Nivellierelement mit einer Tragplatte (2) und einem in einer Pfanne (13) der Tragplatte (2) schwenkbar abgestützten Schraubenbolzen, bei dem zwischen dem Schraubenbolzen (1) und der Tragplatte (2) ein nachgiebiges Riegelglied (14, 15) angeordnet ist, welches beim Einsetzen des Schraubenbolzens (1) in die Pfanne (13) elastisch ausweicht und den eingesetzten Schraubenbolzen (1) mit der Tragplatte (2) unlösbar verbindet, und bei dem der Schraubenbolzen (1) beim Endabschnitt eine gewölbt verlaufende Stirnfläche (12) aufweist, die Pfanne (13) eine kegelstumpfförmige Querschnittsform aufweist und die Stirnfläche (12) in Linienberührung mit der Pfanne (13) steht.

2. Nivellierelement nach Anspruch 1, dadurch gekennzeichnet, dass der Schraubenbolzen (1) beim in der Tragplatte (2) gelegenen Endabschnitt eine in Umfangsrichtung verlaufende Ausnehmung (10) aufweist, dass das Riegelglied (14, 15) einen dünnwandigen, mit der Tragplatte (2) fest verbundenen Tragabschnitt (14) aufweist, von welchem ein in die Ausnehmung (10) ragender, dünnwandiger Federabschnitt (15) absteht, der schiefwinklig zur Achse (16) des Schraubenbolzens (1) gegen die Stirnfläche (12) hin geneigt verläuft.

3. Nivellierelement nach Anspruch 2, dadurch gekennzeichnet, dass der Schraubenbolzen (1) bei der Ausnehmung (10) durch den hineinragenden, dünnwandigen Federabschnitt (15) seitlich abgestützt ist, um ein in horizontaler Richtung erfolgendes Verschieben des Schraubenbolzens (1) relativ zur Tragplatte (2) bei Stosseinwirkungen zu verhindern.

## Claims

1. A levelling element comprising a bearer plate (2) and a screw bolt supported pivotably in a seat (13) of the bearer plate (2), wherein arranged between the screw bolt (1) and the bearer plate (2) is a flexible locking member (14, 15) which resiliently deflects upon insertion of the screw bolt (1) into the seat (13) and non-releasably connects the inserted screw bolt (1) to the bearer plate (2), and wherein the screw bolt (1) at the end portion has a curved end face (12), the seat (13) is of a frustoconical cross-sectional configuration and the end face (12) is in line contact with the seat (13).

2. A levelling element according to claim 1, characterised in that in the end portion which is disposed in the bearer plate (2) the screw bolt (1) has a peripherally extending recess (10), that the locking member (14, 15) has a thin-walled support portion (14) which is fixedly connected to the bearer plate (2) and from which a thin-walled spring portion (15) projects, the spring portion (15) extending into the recess (10) and extending inclinedly at an obtuse angle relative to the axis (16) of the screw bolt (1) towards the end face (12).

3. A levelling element according to claim 2, characterised in that at the recess (10) the screw bolt (1) is laterally supported by the thin-walled spring portion (15) which extends thereinto, in order to prevent displacement in a horizontal direction of the screw bolt (1) relative to the bearer plate (2) when the arrangement is subjected to knocks.

**Revendications**

1. Elément de mise à niveau comportant une plaque de support (2) et un boulon prenant appui de manière à pouvoir pivoter dans une cavité (13) de la plaque de support (2), et dans lequel entre le boulon (1) et la plaque de support (2) se trouve disposé un organe flexible de verrouillage (14, 15), qui fléchit élastiquement lors de l'insertion du boulon (1) dans la cavité (13) et relie d'une manière indétachable le boulon (1) inséré à la plaque de support (2), et dans lequel le boulon (1) comporte, dans sa section d'extrémité, une surface frontale cintrée (12), la cavité (13) possède une forme en coupe transversale tronconique et la surface frontale (12) établit un contact linéaire avec la cavité (13).

2. Elément de mise à niveau suivant la revendication 1, caractérisé par le fait qu'au niveau de sa section d'extrémité insérée dans la plaque de support (2), le boulon (1) possède un évidement (10) s'étendant dans la direction circonférentielle, que l'organe de verrouillage (14, 15) possède une section de support (14) à paroi mince, reliée rigidement à la plaque de support (2) et à partir de laquelle fait saillie une section formant ressort (15) à paroi mince, qui pénètre dans l'évidement (10) et s'étend obliquement par rapport à l'axe (16) du boulon (1) en direction de la surface frontale (12).

3. Elément de mise à niveau suivant la revendication 2, caractérisé par le fait que le boulon (1) est soutenu latéralement, au niveau de l'évidement (10), par la section rentrante formant ressort (15) à paroi mince, ce qui empêche un décalage du boulon (1), dans une direction horizontale, par rapport à la plaque de support (2) dans le cas de chocs.

*Fig.1*

*Fig.2*